# EUROPEAN PATENT SPECIFICATION

(11) **EP 2 738 584 B1**
(45) Date of publication and mention of the grant of the patent: **21.07.2021**
(21) Application number: 12195300.4
(22) Date of filing: 03.12.2012
(51) Int. Cl.: G02B 6/44

(54) **Fiber optic distribution device**
Glasfaserverteilungsvorrichtung
Dispositif de distribution à fibre optique

(43) Date of publication of application: 04.06.2014
(73) Proprietor: Corning Optical Communications LLC, Charlotte, NC 28216 (US)
(72) Inventor: Ruda, Michal, 93-377 Lodz (PL); Ciechomski, Tomasz, 99-400 Lowicz (PL)
(74) Representative: Sturm, Christoph

(56) References cited:
- EP-A1- 2 383 596
- US-A1- 2005 175 307
- US-A1- 2011 188 220
- US-A1- 2011 268 404
- US-B1- 6 175 079

## Description

The present patent invention relates to a fiber optic distribution device.

When designing data transmission networks comprising optical fibers, it is necessary to handle optical fibers, especially to connect optical fibers to one another. Junctions between optical fibers can be provided by patch connections and splice connections. Such junctions need to be handled both outside buildings and inside buildings. Outside buildings, junctions between optical fibers are accommodated in so called cable sleeves or street cabinets. Inside buildings, junctions between optical fibers are handled in so called distribution cabinets or distribution frames. So called wall boxes are used for the handling of junctions between optical fibers both outside buildings and inside buildings.

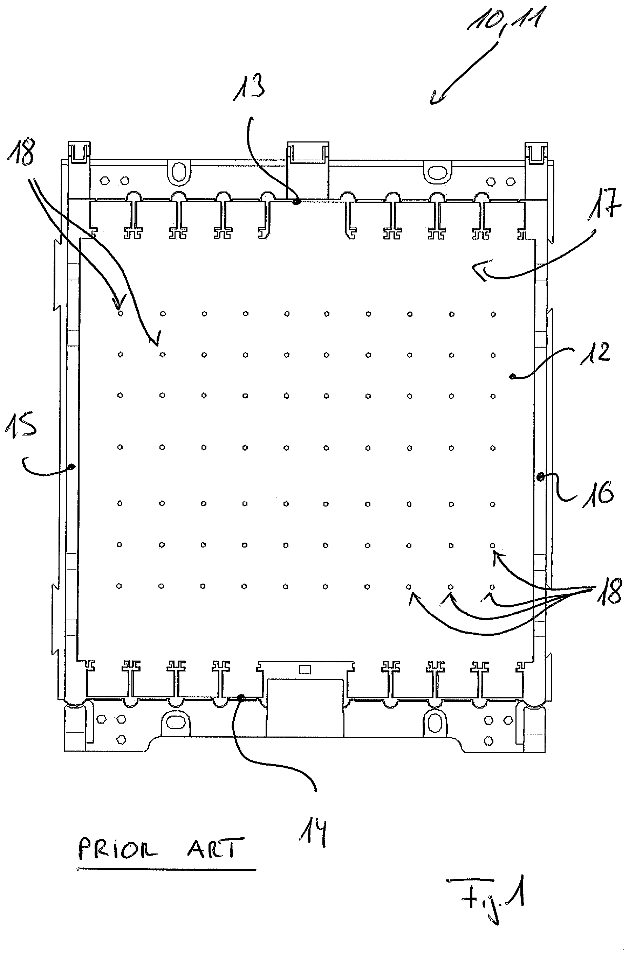

Figure 1 shows a schematic view of a housing 11 of a fiber optic distribution device 10 according to the prior art designed as a wall box. The housing 11 of the prior art fiber optic distribution device 10 of Figure 1 comprises a back wall 12, a front wall (not shown) and side walls 13, 14, 15 and 16 defining together an interior 17 of the housing 11. The prior art fiber optic distribution device 10 further comprises fiber optic management units (not shown) like patch units and/or splice units and/or overlength units for handling optical fibers and/or junctions between optical fibers, wherein the fiber optic management units are positioned in the interior 17 of the housing 11. The fiber optic management units are mounted to the back wall 12 of the housing 11 by screws acting together with holes 18 in the back wall 12 of the housing 11. The holes 18 are arranged in an array, whereby the holes 18 provide fixed installation positions or mounting positions for fiber optic management units at the back wall 12 of the housing 11.

US 2011/0188220 A1 discloses a fiber optic distribution device for handling optical fibers having the features of the preamble of claim 1.

EP 2 383 596 A1, US 2011/0268404 A1, US 2005/0175307 A1 and US 6 175 079 B1 show additional prior art.

The present invention is based on the problem of providing a novel fiber optic distribution device suitable for handling optical fibers both outside buildings and inside buildings, the fiber optic distribution device providing flexible installation positions or mounting positions for fiber optic management units.

Embodiments disclosed herein relate to a fiber optic distribution device having a housing with a back wall. The back wall of the housing comprises at least one set of parallel grooves, whereby each fiber optic management unit is mounted to the back wall by fastening elements acting together with at least one of grooves. The grooves provide flexible installation positions or mounting positions for fiber optic management units at the back wall of the housing of the fiber optic distribution device. In this way, mounting fiber optic management units in the fiber optic distribution device is simple, reliable and cost-effective.

The back wall comprises a first set of parallel grooves running in a first direction and a second set of parallel grooves running in a second direction, wherein the first set of parallel grooves is intersecting the second set of parallel grooves. This is simple, reliable, cost-effective and provides an increased flexibility of installation positions or mounting positions for fiber optic management units at the back wall of the housing of the fiber optic distribution device.

Each fiber optic management unit may be mounted to the back wall by screws cutting into the respective groove. This further development is very simple, reliable and cost-effective.

According to another embodiment, each fiber optic management unit may be mounted to the back wall by snap hooks snapping into the respective groove. This allows a simple, reliable and cost-effective installation.

Embodiments of the fiber optic distribution device are given in the description below. Exemplary embodiments will be explained in more detail with reference to the drawing, in which:
- Figure 1: shows a top view of a housing of a fiber optic distribution device according to the prior art with a removed front wall of the housing;
- Figure 2: shows a top view of a housing of a comparative fiber optic distribution device with a removed front wall of the housing;
- Figure 3: shows a top view of Figure 1 with several fiber optic management units mounted on the back wall of the housing;
- Figure 4: shows the cross-section A-A of Figure 3;
- Figure 5: shows the detail X of Figure 4;
- Figure 6: shows another top view of Figure 1 with several fiber optic management units mounted on the back wall of the housing;
- Figure 7: shows another top view of Figure 1 with one fiber optic management unit mounted on the back wall of the housing; and
- Figure 8: shows a top view of another housing of a fiber optic distribution device according to the present invention with a removed front wall of the housing.

The present patent disclosure relates to a fiber optic distribution device 20, preferably to a wall box. The fiber optic distribution device 20 comprises a housing 21. The housing 21 comprises a back wall 22, a front wall (not shown) and side walls 23, 24, 25 and 26 defining together an interior 27 of the housing 21. The fiber optic distribution device 20 further comprises fiber optic management units for handling optical fibers and/or junctions between optical fibers being positioned in the interior 27 of the housing 21.

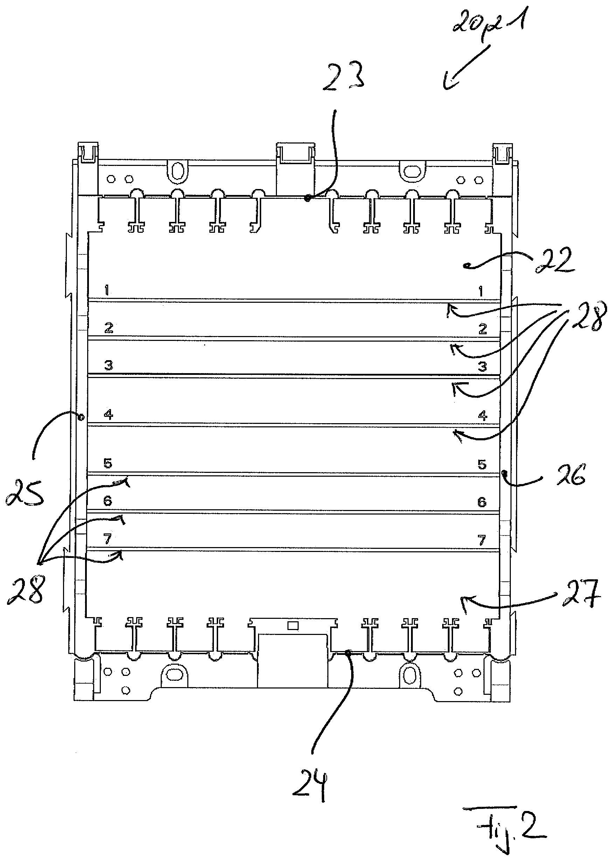

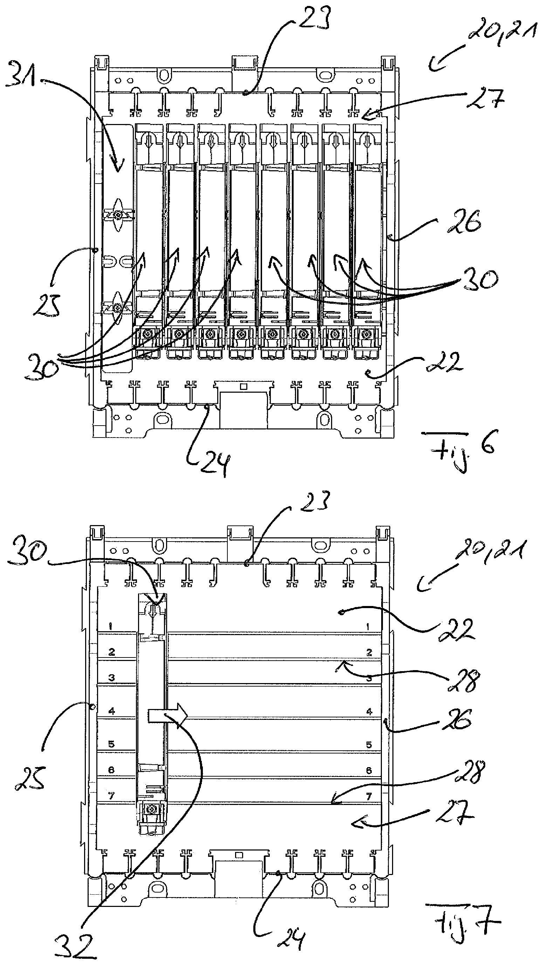

The fiber optic management units are mounted to the back wall 22 of the housing 21 by fastening elements acting together with grooves 28 (see Figures 2, 7) in the back wall 22 of the housing 21. The back wall 22 comprises at least one set of parallel grooves 28, wherein each fiber optic management unit is mounted to the back wall 22 by fastening elements acting together with at least one of the grooves 28.

In the comparative embodiment shown in Figures 1 to 7, the back wall 22 of the housing 21 comprises one set of seven (7) parallel grooves 28 all running in horizontal direction (see Figures 2, 7). Alternatively, the set of parallel grooves 28 could all run in vertical direction.

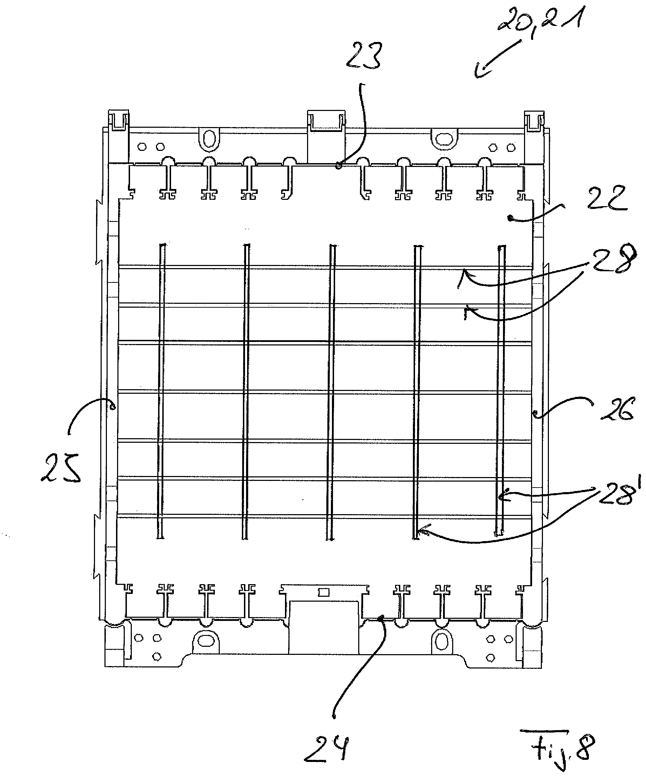

According to the invention (see Figure 8), the back wall 22 of the housing 21 may comprise a first set of parallel grooves 28 running in a first direction and a second set of parallel grooves 28' running in a second direction, wherein the first set of parallel grooves 28 is intersecting the second set of parallel grooves 28'.

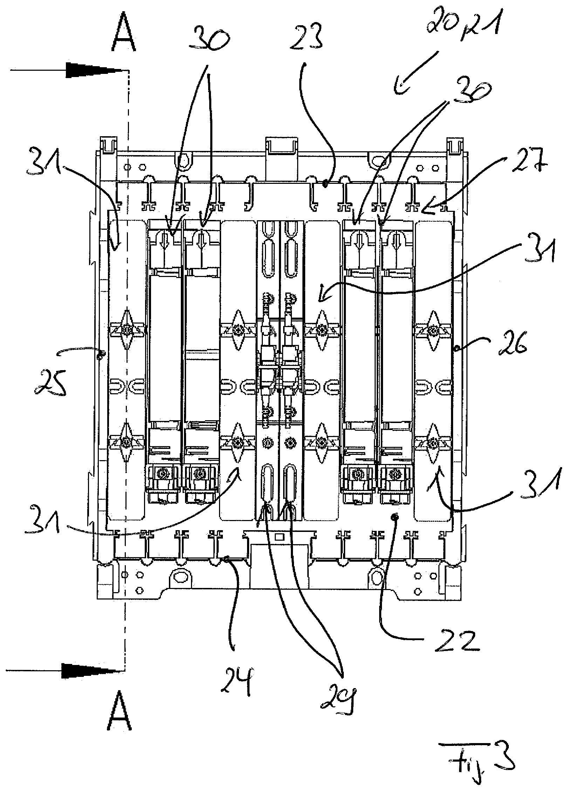

The first set of parallel grooves 28 may run in horizontal direction and that the second set of parallel grooves 28' vertical may run in horizontal direction (see Figure 8). Figure 3 shows the housing 21 of the fiber optic distribution device 20 together with different fiber optic management units 29, 30, 31 mounted to the back wall 27 by fastening elements acting together with at least one of grooves 28.

The fiber optic management units 29 are designed as patch units for handling patch connections between optical fibers. The fiber optic management units 30 are designed as splice units for handling splice connections between optical fibers. The fiber optic management units 31 are designed as routing units for routing optical fibers between the fiber optic management units 29, 30. Several stacked fiber optic management units 31 may provide an overlength unit for handling overlength of optical fibers.

Figure 6 shows the housing 21 of the fiber optic distribution device 20 together with eight (8) fiber optic management units 30 designed as splice units and one (1) fiber optic management units 31 designed as routing unit.

Figure 7 shows the housing 21 of the fiber optic distribution device 20 together with one (1) fiber optic management unit 30 designed as splice unit, wherein by the arrow 32 illustrates that the mounting position of fiber optic management unit 30 at the back wall 22 of the housing 21 is flexible along the direction of the parallel grooves.

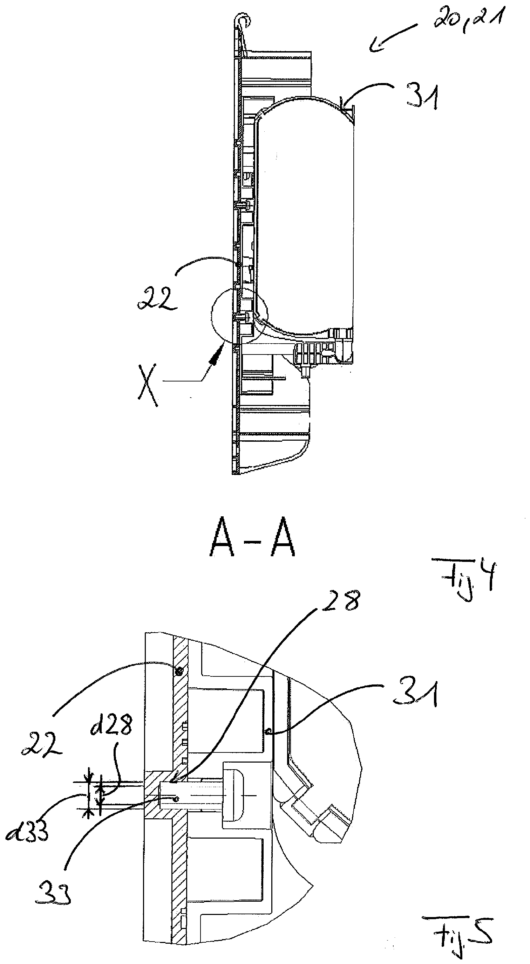

As mentioned above, each fiber optic management unit 29, 30, 31 is mounted to the back wall 22 of the housing 21 by fastening elements acting together with at least one of the grooves 28 in the back wall 22 of the housing 21. In Figures 4 and 5, each fiber optic management unit 29, 30, 31 is mounted to the back wall 22 by screws 33 cutting into the respective groove 28, namely into the material of the back wall 22 in the region of the respective groove 28. The outer diameter d33 (see Figure 5) of the screws 33 is larger than the respective dimension d28 (see Figure 5) of the groove 28 so that the respective screw 33 cuts into the material of the back wall 22 in the region of the respective groove 28.

By disengaging the screws 33 from the back wall 22, the position of the respective fiber optic management unit 29, 30, 31 can be changed along the groove 28 in a continuous manner.

Alternatively, each fiber optic management unit 29, 30, 31 may be mounted to the back wall 22 by snap hooks snapping into the respective groove 28. The shape of the groove may be modified for such a snap hooks connection.

In this way, fiber optic management units 29, 30, 31 may be installed in the fiber optic distribution device 10 in different positions along groove 28 in the back wall 22 of the housing 21 of the fiber optic distribution device 10. Additionally, the fiber optic distribution device 10 is modular and scalable.

### List of reference numerals

- 10: fiber optic distribution device
- 11: housing
- 12: back wall
- 13: side wall
- 14: side wall
- 15: side wall
- 16: side wall
- 17: interior
- 18: hole

- 20: fiber optic distribution device
- 21: housing
- 22: back wall
- 23: side wall
- 24: side wall
- 25: side wall
- 26: side wall
- 27: interior
- 28, 28': groove
- 29: fiber optic management unit
- 30: fiber optic management unit
- 31: fiber optic management unit
- 32: arrow
- 33: screw

## Claims

1. A fiber optic distribution device (20) for handling optical fibers, especially wall box, the fiber optic distribution device (20) comprises:
a housing (21) with a back wall (22), a front wall and side walls (23, 24, 25, 26) defining together an interior (27) of the housing (21);
fiber optic management units (29, 30, 31) like patch units and/or splice units and/or overlength units for handling optical fibers and/or junctions between optical fibers, wherein the fiber optic management units (29, 30, 31) are positioned in the interior (27) of the housing (21), and wherein the fiber optic management units (29, 30, 31) are mounted to the back wall (22) of the housing (21);
the back wall (22) comprises at least one set of parallel grooves (28), whereby each fiber optic management unit (29, 30, 31) is mounted to the back wall (22) by fastening elements acting together with at least one of grooves (28, 28');
**characterized in that**
the back wall (22) comprises a first set of parallel grooves (28) running in a first direction and a second set of parallel grooves (28') running in a second direction, wherein the first set of parallel grooves (28) is intersecting the second set of parallel grooves (28').

2. The fiber optic distribution device of claim 1, **characterized in that** the first set of parallel grooves (28) run in horizontal direction and that the second set of parallel grooves (28') in vertical direction.

3. The fiber optic distribution device of claim 1 or 2, **characterized in that** each fiber optic management unit (29, 30, 31) is mounted to the back wall (22) by screws (33) cutting into the material of the back wall (22) in the region of the respective groove (28, 28').

4. The fiber optic distribution device of claim 1 or 2, **characterized in that** each fiber optic management unit (29, 30, 31) is mounted to the back wall (28) by snap hooks snapping into the respective groove (28, 28').

## Patentansprüche

1. Faseroptische Verteilungsvorrichtung (20) zur Handhabung optischer Fasern, insbesondere Wandkasten, wobei die faseroptische Verteilungsvorrichtung (20) Folgendes aufweist:
ein Gehäuse (21) mit einer Rückwand (22), einer Vorderwand und Seitenwänden (23, 24, 25, 26), die zusammen einen Innenraum (27) des Gehäuses (21) definieren,
faseroptische Verwaltungseinheiten (29, 30, 31) wie Patcheinheiten und/oder Spleißeinheiten und/oder Überlängeneinheiten zur Handhabung von optischen Fasern und/oder Abzweigungen zwischen optischen Fasern, wobei die faseroptischen Verwaltungseinheiten (29, 30, 31) in dem Innenraum (27) des Gehäuses (21) positioniert sind und wobei die faseroptischen Verwaltungseinheiten (29, 30, 31) an der Rückwand (22) des Gehäuses (21) montiert sind,
die Rückwand (22) zumindest einen Satz paralleler Nuten (28) aufweist, wodurch jede faseroptische Verwaltungseinheit (29, 30, 31) mittels Befestigungselementen, die mit zumindest einer der Nuten (28, 28') zusammenwirken, an der Rückwand (22) montiert ist,
**dadurch gekennzeichnet, dass**
die Rückwand (22) einen ersten Satz paralleler Nuten (28), die in eine erste Richtung laufen, und einen zweiten Satz paralleler Nuten (28'), die in eine zweite Richtung laufen, aufweist, wobei der erste Satz paralleler Nuten (28) den zweiten Satz paralleler Nuten (28') kreuzt.

2. Faseroptische Verteilungsvorrichtung nach Anspruch 1, **dadurch gekennzeichnet, dass** der erste Satz paralleler Nuten (28) in horizontale Richtung laufen und dass der zweite Satz paralleler Nuten (28') in vertikale Richtung laufen.

3. Faseroptische Verteilungsvorrichtung nach Anspruch 1 oder 2, **dadurch gekennzeichnet, dass** jede faseroptische Verwaltungseinheit (29, 30, 31) mittels Schrauben (33), die in dem Bereich der jeweiligen Nut (28, 28') in das Material der Rückwand (22) schneiden, an der Rückwand (22) montiert ist.

4. Faseroptische Verteilungsvorrichtung nach Anspruch 1 oder 2, **dadurch gekennzeichnet, dass** jede faseroptische Verwaltungseinheit (29, 30, 31) mittels Schnapphaken, die in die jeweiligen Nuten (28, 28') einschnappen, an der Rückwand (28) montiert ist.

## Revendications

1. Dispositif de distribution de fibres optiques (20) pour manipuler des fibres optiques, en particulier boîtier mural, le dispositif de distribution de fibres optiques (20) comprenant :
un boîtier (21) avec une paroi arrière (22), une paroi avant et des parois latérales (23, 24, 25, 26) définissant ensemble un intérieur (27) du boîtier (21) ;
des unités de gestion de fibres optiques (29, 30, 31) telles que des unités de connexion et/ou des unités d'épissurage et/ou des unités de surlongueur pour manipuler des fibres optiques et/ou des jonctions entre des fibres optiques, les unités de gestion de fibres optiques (29, 30, 31) étant positionnées dans l'intérieur (27) du boîtier (21), et les unités de gestion de fibres optiques (29, 30, 31) étant montées sur la paroi arrière (22) du boîtier (21) ;
la paroi arrière (22) comprenant au moins un ensemble de rainures parallèles (28), chaque unité de gestion de fibres optiques (29, 30, 31) étant monté sur la paroi arrière (22) par des éléments d'attache agissant conjointement avec au moins l'une des rainures (28, 28') ;
**caractérisé en ce que**
la paroi arrière (22) comprend un premier ensemble de rainures parallèles (28) s'étendant dans une première direction et un deuxième ensemble de rainures parallèles (28') s'étendant dans une deuxième direction, le premier ensemble de rainures parallèles (28) intersectant le deuxième ensemble de rainures parallèles (28').

2. Dispositif de distribution de fibres optiques selon la revendication 1, **caractérisé en ce que** le premier ensemble de rainures parallèles (28) s'étend dans la direction horizontale et **en ce que** le deuxième ensemble de rainures parallèles (28') s'étend dans la direction verticale.

3. Dispositif de distribution de fibres optiques selon la revendication 1 ou 2, **caractérisé en ce que** chaque unité de gestion de fibres optiques (29, 30, 31) est montée sur la paroi arrière (22) par des vis (33) coupant dans le matériau de la paroi arrière (22) dans la région de la rainure respective (28, 28').

4. Dispositif de distribution de fibres optiques selon la revendication 1 ou 2, **caractérisé en ce que** chaque unité de gestion de fibres optiques (29, 30, 31) est montée sur la paroi arrière (28) par des crochets d'encliquetage s'encliquetant dans la rainure respective (28, 28').
